# EUROPÄISCHE PATENTSCHRIFT

(11) **EP 3 947 074 B1**
(45) Veröffentlichungstag und Bekanntmachung des Hinweises auf die Patenterteilung: **07.02.2024**
(21) Anmeldenummer: 20722568.1
(22) Anmeldetag: 28.04.2020
(51) Int. Cl.: B60W 30/06, G06V 20/58, G08G 1/16, B62D 15/02, G06T 7/70, G06T 7/90

(54) **VERFAHREN ZUM EINPARKEN EINES FAHRZEUGS IN EINER QUERPARKLÜCKE UNTER BERÜCKSICHTIGUNG VON SCHEINWERFERPOSITIONEN BENACHBART GEPARKTER FAHRZEUGE, SOWIE PARKASSISTENZSYSTEM**
METHOD FOR PARKING A VEHICLE IN A PERPENDICULAR PARKING SPACE TAKING INTO ACCOUNT HEADLIGHT POSITIONS OF ADJACENTLY PARKED VEHICLES, AND PARKING ASSISTANCE SYSTEM
PROCÉDÉ DE STATIONNEMENT D'UN VÉHICULE DANS UNE PLACE DE STATIONNEMENT TRANSVERSALE EN TENANT COMPTE DE POSITIONS DE FEUX DE VÉHICULES STATIONNÉS DANS LE VOISINAGE, AINSI QUE SYSTÈME D'AIDE AU STATIONNEMENT

(30) Priorität: 16.05.2019 DE 102019207190
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: HÜGER, Philipp, 38471 Rühen (DE); JÖRDENS, Christian, 38126 Braunschweig (DE)
(86) Internationale Anmeldenummer: PCT/EP2020/061800
(87) Internationale Veröffentlichungsnummer: WO 2020/229169

(56) Entgegenhaltungen:
- EP-A1- 2 597 016
- WO-A1-2018/177702
- CN-A- 109 677 398
- DE-A1-102006 004 770

## Beschreibung

Ein Aspekt der Erfindung betrifft ein Verfahren zum Einparken eines Fahrzeugs in eine erste Querparklücke. In zumindest einer zweiten Querparklücke, die an die erste Querparklücke angrenzt, ist ein weiteres Fahrzeug geparkt. Die Position und/oder die Orientierung des weiteren Fahrzeugs in der zweiten Querparklücke wird bestimmt. Abhängig davon wird die Zielposition und/oder die Zielorientierung des Fahrzeugs in der ersten Querparklücke bestimmt. Ein weiterer Aspekt der Erfindung betrifft ein Parkassistenzsystem für ein Fahrzeug.

Verfahren, wie sie oben genannt wurden, sind aus dem Stand der Technik bekannt. So beschreibt die DE 10 2011 077 173 A1 ein Verfahren zum Bestimmen einer Einparktrajektorie. Das einzuparkende Fahrzeug kann dabei abhängig von einer Orientierung und/oder einer Position von Fahrzeugen, die in benachbarten Querparklücken abgestellt sind, in die zu beparkende Querparklücke gebracht werden. Dabei kann eine außermittige Parkposition in der Querparklücke eingenommen werden. Auch die Orientierung des zu parkenden Fahrzeugs in der Querparklücke und somit, ob das Fahrzeug vorwärts oder rückwärts in die Querparklücke eingeparkt werden soll, kann abhängig von der Position und/oder Orientierung der benachbart geparkten Fahrzeuge erfolgen.

Des Weiteren ist aus der DE 10 2014 210 043 A1 ein Verfahren zur Durchführung eines Einparkvorgangs eines Fahrzeugs in eine Querparklücke bekannt. Auch dort kann abhängig von der Position und/oder der Orientierung von benachbart geparkten Fahrzeugen eine vorteilhafte Position und/oder Orientierung des in die Querparklücke zu parkende Fahrzeugs bestimmt werden. Zur Bestimmung der Orientierung der benachbart geparkten Fahrzeuge kann ein Lenkrad der anderen parkenden Fahrzeuge bezüglich seiner Position bestimmt werden und abhängig davon erkannt werden, ob das benachbart geparkte Fahrzeug vorwärts oder rückwärts eingeparkt ist.

In diesem Stand der Technik wird daher konkret angegeben, auf Basis welcher Informationen die Orientierung der benachbart geparkten Fahrzeuge bestimmt werden soll. Allerdings sind diese Komponenten, wie sie durch ein Lenkrad gegeben sind, relativ verdeckt und daher nur schwer erfassbar. Darüber hinaus sind sie im Inneren des Kraftfahrzeugs angeordnet und sie können daher allein schon aus diesem Grund schwer von außerhalb erfasst werden. Die Orientierung der in benachbarten Querparklücken abgestellten Fahrzeuge ist daher im Stand der Technik unzureichend möglich.

Die EP 2 597 016 A1 zeigt ein Steuersystem einer Einparkhilfe für ein Fahrzeug. Das Steuersystem umfasst Sensoren zum Erkennen von Fahrzeugen, die neben einer Parklücke geparkt sind, und weitere Sensoren zum Bestimmen ihrer nach vorne oder nach hinten gerichteten Ausrichtung, zum Beispiel durch Erkennen von Reflexionen von ihren Rückreflektoren.

Es ist Aufgabe der vorliegenden Erfindung, ein Verfahren zu schaffen, bei welchem in einem durchzuführenden Parkvorgang eines Fahrzeugs in eine Querparklücke benachbarte Fahrzeuge verbessert erfasst werden können. Ebenso ist es Aufgabe ein Parkassistenzsystem für ein Fahrzeug zu schaffen.

Diese Aufgabe wird durch ein Verfahren und ein Parkassistenzsystem gemäß den unabhängigen Ansprüchen gelöst.

Ein Aspekt der Erfindung betrifft ein Verfahren zum Einparken eines Fahrzeugs in eine erste Querparklücke. In zumindest einer zweiten Querparklücke, die an die erste Querparklücke direkt angrenzt, ist ein weiteres Fahrzeug geparkt. Die Position und/oder Orientierung des weiteren Fahrzeugs in der zweiten Querparklücke wird bestimmt. Abhängig davon wird die zu erreichende Zielposition und/oder die zu erreichende Zielorientierung des Fahrzeugs in der ersten Querparklücke, in welche das Fahrzeug eingeparkt werden soll, insbesondere vor dem Einparken in die erste Querparklücke, bestimmt. Durch eine optische Erfassungseinheit des Fahrzeugs wird zumindest ein Bild des weiteren Fahrzeugs vor dem Einparken des Fahrzeugs in die erste Querparklücke erzeugt. Das Bild wird dahingehend ausgewertet, ob auf dem Bild ein Frontscheinwerfer oder eine Heckleuchte des weiteren Fahrzeugs zu erkennen ist. Es wird erkannt, dass das weitere Fahrzeug vorwärts orientiert in die zweite Querparklücke eingeparkt ist, wenn in dem Bild zumindest eine Heckleuchte des weiteren Fahrzeugs enthalten ist. Es wird erkannt, dass das weitere Fahrzeug rückwärts orientiert in die zweite Querparklücke eingeparkt ist, wenn in dem Bild zumindest ein Frontscheinwerfer des weiteren Fahrzeugs enthalten ist. Ein Vorwärtseinparken ist in dem Zusammenhang eine derartige Orientierung, bei welcher die Front des weiteren Fahrzeugs der hinteren Begrenzung der Querparklücke zugewandt ist und das Heck dieses weiteren Fahrzeugs der Fahrbahn, die an diese zweite Querparklücke angrenzt, zugewandt ist.

Durch eine derartige Ausgestaltung ist es schneller und präziser ermöglicht, das weitere Fahrzeug zu erfassen, im Hinblick auf dessen Orientierung in der zweiten Querparklücke. Es werden in dem Zusammenhang charakteristische Komponenten dieses weiteren Fahrzeugs ausgewertet. Diese charakteristischen Komponenten sind derartige, die außenseitig an dem weiteren Fahrzeug angeordnet sind. Diese Komponenten sind daher einfacher und eindeutiger zu erkennen. Dadurch lässt sich eine verbesserte und exaktere Bestimmung der Orientierung des weiteren Fahrzeugs in der zweiten Querparklücke erreichen. Darüber hinaus sind gerade diese konkreten Lichtquellen, nämlich eine Heckleuchte und ein Frontscheinwerfer eindeutigere charakteristische Merkmale, die eine Orientierung des weiteren Fahrzeugs ermöglichen. Da beispielsweise ein Lenkrad, wie es im Stand der Technik ausgewertet wird, auch umfänglich von einem Armaturenbrett oder dergleichen verdeckt sein kann, ist das Erkennen diesbezüglich schwierig. Darüber hinaus kann ein Lenkrad auch an mehreren Positionen sein, beispielsweise bei einem linksgesteuerten oder einem rechtsgesteuerten Fahrzeug. Eine eindeutige Bestimmung der Orientierung des Fahrzeugs anhand des Lenkrads ist daher im Stand der Technik nicht möglich.

Durch die Vorgehensweise bei dem genannten Aspekt der Erfindung hingegen ist eindeutig, dass das Fahrzeug vorwärts in die zweite Querparklücke eingeparkt ist, wenn eine Heckleuchte erkannt wird. Da Heckleuchten nur am Heck eines Fahrzeugs angeordnet sein können, sind diese spezifischen Lichtquellen auch eine Orientierung für eindeutig angebende Komponenten. Selbiges gilt in dem Zusammenhang für Frontscheinwerfer. Darüber hinaus ermöglichen derartige konkrete Lichtquellen, wie sie genannt wurden, auch unter verschiedensten Perspektiven, unter welchen das weitere Fahrzeug durch die optische Erfassungseinheit erfasst werden kann, eine verbesserte Erkennung der Orientierung. Insbesondere ist es darüber hinaus auch möglich, da üblicherweise zwei Heckscheinwerfer und zwei Frontscheinwerfer an einem Fahrzeug verbaut sind, die Orientierung einfacher und schneller sowie präziser bestimmen zu können. Denn auch unter unterschiedlichsten Perspektiven kann zumindest eine Heckleuchte oder zumindest ein Frontscheinwerfer erkannt werden und somit anhand bereits einer dieser jeweiligen Lichtquellen eine Orientierung genauer bestimmt werden.

Vorzugsweise ist vorgesehen, dass die Farbgebung einer Lichtquelle in dem Bild analysiert wird. Es wird eine Heckleuchte erkannt, wenn eine rote Lichtquelle erkannt wird. Insbesondere ist damit auch eindeutig erkannt, dass kein Frontscheinwerfer vorliegt, da ein derartiger niemals rot sein kann. Insbesondere kann dann, wenn eine "weiße" Lichtquelle erkannt wird, ein Frontscheinwerfer des Fahrzeugs vorliegen. Es kann aber auch eine Heckleuchte sein. Denn auch Heckleuchten können bei spezifischen Fahrzeugen zumindest überwiegend als weiß erscheinend ausgebildet sein. Insbesondere wird ein Frontscheinwerfer des weiteren Fahrzeugs erkannt, wenn eine weiße Lichtquelle erkannt wird. Da diese Farbgebungen im nicht eingeschalteten Zustand der Lichtquelle, insbesondere aufgrund der dauerhaften "farbigen" Abdeckgläser typisch für diese beiden konkreten Lichtquellen am Fahrzeug sind, kann anhand eines einfachen Kriteriums, nämlich dieser Farbgebung, relativ eindeutig die Orientierung des weiteren Fahrzeugs bestimmt werden. Darüber hinaus sind diese Farbgebungen auch so unterschiedlich, nämlich weiß oder im Wesentlichen weiß und rot oder im Wesentlichen rot, sodass auch deutlich zwischen einer Heckleuchte und einem Frontscheinwerfer unterschieden werden kann.

Erfindungsgemäß ist es vorgesehen, dass das Bild dahingehend ausgewertet wird, ob in Breitenrichtung des weiteren Fahrzeugs an gegenüberliegenden Endbereichen beziehungsweise Seitenbereiche dieses weiteren Fahrzeugs jeweils eine gleiche Lichtquelle erkannt wird. Es werden dann dadurch Lichtquellen im Bereich des weiteren Fahrzeugs erkannt, die Frontscheinwerfer oder Heckleuchten sein können. Da diese konkreten Lichtquellen, nämlich eine Heckleuchte und ein Frontscheinwerfer, auch an ganz konkreten Zonen eines Fahrzeugs üblicherweise angeordnet sind, kann auch über diese örtliche Auffindung von Lichtquellen in dem Bild an dem weiteren Fahrzeug eine verbesserte und eindeutigere Zuordnung dieser Komponenten als ein Frontscheinwerfer oder eine Heckleuchte erfolgen. Daraus resultiert wiederum die präzisere Bestimmung der Orientierung dieses weiteren Fahrzeugs.

Insbesondere dann, wenn Farbprofile in dem Bild ausgewertet werden, kann insbesondere dann auf eine Heckleuchte und/oder einen Frontscheinwerfer geschlossen werden, wenn sich die Farbprofile größenmäßig und/oder farblich im Bild gleich oder im Wesentlichen gleich darstellen. Da ein Fahrzeug an den in Breitenrichtung gegenüberliegenden Endbereichen gleiche Heckleuchten und gleiche Frontscheinwerfer aufweist, kann durch entsprechend beabstandete, gleiche Farbprofile in dem Bild auch genauer auf derartige Lichtquellen geschlossen werden.

Erfindungsgemäß ist es alternativ oder zusätzlich vorgesehen, dass in dem Bild nach einem amtlichen Kennzeichen, welches ein Nummernschild des weiteren Fahrzeugs darstellt, gesucht wird. Dann, wenn ein derartiges amtliches Kennzeichen erkannt wird, wird abhängig davon nach einem Frontscheinwerfer oder einer Heckleuchte des weiteren Fahrzeugs in dem Bild gesucht. Dies ist ein weiteres vorteilhaftes Vorgehen. Denn ein amtliches Kennzeichen ist ein besonders charakteristisches Merkmal eines Fahrzeugs und kann deutlich von anderen Komponenten unterschieden werden. Es kann daher einfach und schnell erkannt werden. Da üblicherweise derartige amtliche Kennzeichen an ganz konkreten wenigen Stellen eines Fahrzeugs angebracht sind, kann durch die Detektion eines amtlichen Kennzeichens auch quasi eine Referenzstelle beziehungsweise eine Referenzposition gebildet werden. Da in dem Zusammenhang auch bekannt ist, dass diese spezifischen Lichtquellen, nämlich Heckleuchten oder Frontscheinwerfer, quasi dupliziert, und insbesondere symmetrisch, an in Breitenrichtung des weiteren Fahrzeugs gegenüberliegenden Seiten zu einem derartigen amtlichen Kennzeichen üblicherweise ausgebildet sind, lässt sich durch ein derartiges Auffinden eines amtlichen Kennzeichens auch schneller und präziser ein Auffinden von Heckleuchten und/oder Frontscheinwerfern in dem Bild durchführen.

Vorzugsweise ist vorgesehen, dass bei einem Erkennen des amtlichen Kennzeichens in dem Bild basierend auf der Position des amtlichen Kennzeichens zwei neue Suchfelder für das weitere Auswerten beziehungsweise Analysieren in dem Bild erzeugt werden. Diese Suchfelder sind in Breitenrichtung des weiteren Fahrzeugs in einem definierten ersten Abstand zur Position des amtlichen Kennzeichens ausgebildet. Dies eine weitere sehr vorteilhafte Ausführung, da somit auch dann, wenn ein amtliches Kennzeichen aufgefunden wurde, nicht im vollständig restlichen Bereich des Bilds nach potentiellen Lichtquellen in Form von Frontscheinwerfern oder Heckleuchten gesucht wird. Es wird in dem Zusammenhang ein lokaler Ausschnitt in dem Bild herangezogen, der durch ein derartiges Suchfeld gebildet ist. Es wird dann nur in diesem örtlich definiert angeordneten beziehungsweise erzeugten Suchfeld nach einem Frontscheinwerfer oder einer Heckleuchte gesucht. Der Aufwand für die Suche nach einem derartigen konkreten Frontscheinwerfer oder einer konkreten Heckleuchte ist dadurch reduziert.

Es kann zusätzlich oder anstatt dazu vorgesehen sein, dass bei einem Erkennen des amtlichen Kennzeichens in dem Bild basierend auf der Position des amtlichen Kennzeichens zwei neue Suchfelder im Bild erzeugt werden, die in Höhenrichtung des weiteren Fahrzeugs jeweils einen definierten zweiten Abstand zur Position des amtlichen Kennzeichens aufweisen. Auch diesbezüglich gelten die bereits oben genannten Vorteile.

Insbesondere werden diese beiden Abstände, nämlich der erste Abstand und der zweite Abstand, dort gebildet, wo Lichtquellen des weiteren Fahrzeugs üblicherweise relativ zum amtlichen Kennzeichen an einem Fahrzeug angeordnet sind. Es wird daher nicht nur eine verkleinerte Suchzone aus dem gesamten Bild gebildet, nämlich durch die Suchfelder, sondern es werden zusätzlich diese auch vorteilhaft lokal in dem Bild definiert so gesetzt, dass dann, wenn ein Frontscheinwerfer oder eine Heckleuchte vorhanden ist, diese mit hoher Wahrscheinlichkeit dann auch in diesem lokal gesetzten Suchfeld vorhanden sein müssen. Auch dadurch ist der Aufwand für die Suche nach einem Frontscheinwerfer oder einer Heckleuchte reduziert. Das gesamte Verfahren kann daher schneller durchgeführt werden.

Vorzugsweise ist vorgesehen, dass in diesen Suchfeldern eine Farbverteilung ausgewertet wird. Bei einem Rotanteil größer einem Schwellwert wird eine Heckleuchte erkannt. Insbesondere bei einem Weißanteil größer einem Schwellwert wird ein Frontscheinwerfer erkannt. Ist der Weißanteil kleiner einem Schwellwert kann gegebenenfalls auch eine Heckleuchte vorliegen. Dies begünstigt die Suche nach einer Heckleuchte oder einem Frontscheinwerfer. Es kann in dem Zusammenhang relativ einfach und aufwandsarm sein, wenn die Suchfelder flächenmäßig begrenzt sind und lokal definiert in dem Bild zum amtlichen Kennzeichen festgelegt sind, so dass mit hoher Wahrscheinlichkeit ein Auffinden eines Frontscheinwerfers oder einer Heckleuchte ermöglicht ist. Indem noch zusätzlich auf sehr einfach und aufwandsarme Weise nach einer gezielten Farbverteilung, insbesondere im Rotanteil und dem Weißanteil gesucht wird, kann, insbesondere ohne weitere konkrete Suchanalyse, sehr schnell und einfach eine Heckleuchte oder ein Frontscheinwerfer in dem jeweiligen Suchfeld geschlossen werden. Diese Farbgebung ist ein einfach auszuwertender Analyseparameter.

Es kann auch vorgesehen sein, dass die Suchfelder so groß gesetzt werden, dass eine charakteristische Begrenzungskontur einer Komponente des weiteren Fahrzeugs, die üblicherweise an einem Heck oder einer Front des weiteren Fahrzeugs angeordnet ist, erfasst wird beziehungsweise erfasst werden kann, wobei das Heck oder die Front in dem Bild erfasst ist. Die Begrenzungskontur wird dahingehend ausgewertet, ob es sich bei der Komponente in dem Bild um eine außenseitige Lichtquelle handelt, insbesondere ob es sich um einen Frontscheinwerfer oder eine Heckleuchte handelt. Durch ein derartiges Vorgehen kann zusätzlich oder anstatt zur Auswertung der Farbverteilung ein alternativer Weg geschaffen werden, um einen Frontscheinwerfer oder eine Heckleuchte genauer erkennen zu können. Auch diese Begrenzungskonturen der spezifischen Lichtquelle können präzise Analyseparameter sein, um ein Erkennen derartiger spezifischer Lichtquellen verbessert zu ermöglichen.

Vorzugsweise ist vorgesehen, dass abhängig von der Position des amtlichen Kennzeichens zumindest ein drittes Suchfeld in dem Bild erzeugt wird. Dieses dritte Suchfeld ist separat und unabhängig von den anderen beiden Suchfeldern. Es kann vorgesehen sein, dass dieses dritte Suchfeld, insbesondere unmittelbar, oberhalb dem amtlichen Kennzeichen erzeugt ist. Es kann aber auch örtlich anderweitig im Bild am Fahrzeug erzeugt werden. Das dritte Suchfeld wird bezüglich seiner Farbgebung ausgewertet und abhängig davon wird die Farbgebung des weiteren Fahrzeugs bestimmt. Dies ist eine weitere sehr vorteilhafte Ausführung. Denn dadurch ist es ermöglicht, dass die grundsätzliche Farbgebung des Fahrzeugs und so somit die Lackierung des Fahrzeugs erkannt wird. Damit kann auch erreicht werden, dass Fehlinterpretationen in den anderen Suchfeldern vermieden werden. Insbesondere dann, wenn zur Lichtquelle ähnliche Farbgebungen, beispielsweise ein Rotton oder ein Weißton, die Lackierung des Fahrzeugs betrifft, kann dadurch auch eine Unterscheidung zu einem Frontscheinwerfer und einer Heckleuchte ermöglicht werden. Insbesondere ist dies jedoch auch ein weiteres zusätzliches eindeutiges Charakteristikum, wenn das Fahrzeug eine andere wie rot oder weiß aufweist, um auch demgegenüber dann einen Frontscheinwerfer oder eine Heckleuchte eindeutig davon unterscheiden zu können. Gerade diese lokale Position des dritten Suchfelds ist vorteilhaft, um eine derartige Lackierung des Fahrzeugs sehr präzise erkennen zu können. Üblicherweise wenn oberhalb dem Nummernschild beziehungsweise dem amtlichen Kennzeichen eine größere Zone, wie beispielsweise die Motorhaube oder ein Kofferraum angeordnet ist und in dem Zusammenhang größere Flächen mit einer einheitlichen Farbgebung, nämlich der Lackierung des Fahrzeugs, vorliegen, kann dadurch auch diese Lackierung sehr genau und schnell erkannt werden. Insbesondere wird somit dann in vorteilhafter Weise ein Vergleich der erkannten Farbgebung in dem dritten Suchfeld mit den Farbgebungen in zumindest dem ersten Suchfeld und/oder zumindest dem zweiten Suchfeld durchgeführt. Ein derartiges Vergleichen lässt Fehldetektionen zumindest wesentlich.

Vorzugsweise ist vorgesehen, dass das Fahrzeug zumindest einen Radarsensor mit Höhenmessfunktion aufweist. Mit diesem Radarsensor wird, wenn er detektiert wird, ein Übergang zwischen einem Karosseriebereich und einem Dach des weiteren Fahrzeugs bestimmt. Abhängig von einer Position dieses Übergangs zu einem Ende des weiteren Fahrzeugs, beispielsweise einer Front oder einem Heck, wird erkannt, ob das weitere Fahrzeug vorwärts oder rückwärts orientiert in der zweiten Querparklücke geparkt ist. Da bei vielen Fahrzeugen die Motorhaube länger ist als ein Kofferraumbereich kann anhand dieses Abstands zwischen einem Ende des weiteren Fahrzeugs und dem Übergang in das Dach auch durch diese Information erkannt werden, ob das Fahrzeug in einem vorderen Bereich detektiert wurde oder in einem hinteren Bereich. Damit kann abhängig davon dann auch die Orientierung dieses weiteren Fahrzeugs in der zweiten Querparklücke erkannt werden.

Es sei angemerkt, dass auch vielfältigste Kombinationen der oben erläuterten jeweils vorteilhaften Ausführungen möglich sind. Insbesondere kann sowohl die bildhafte Auswertung alleine durchgeführt werden. Zusätzlich oder anstatt dazu kann die Auswertung mit dem Radarsensor erfolgen.

Ein weiterer Aspekt der Erfindung betrifft ein elektronisches Parkassistenzsystem für ein Fahrzeug zum Einparken des Fahrzeugs in eine Querparklücke. Das Parkassistenzsystem weist zumindest eine Erfassungseinheit und zumindest eine Auswerteeinheit beziehungsweise Steuereinheit auf. Das Parkassistenzsystem ist zum Durchführen eines Verfahrens gemäß dem oben genannten Aspekt und einer vorteilhaften Ausgestaltung davon ausgebildet. Insbesondere wird das Verfahren mit dem Parkassistenzsystem durchgeführt.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine vereinfachte Draufsicht auf eine erste Parksituation;
- Fig. 2: eine vereinfachte Draufsicht auf eine zweite Parksituation;
- Fig. 3: eine vereinfachte Draufsicht auf eine dritte Parksituation;
- Fig. 4: eine vereinfachte Draufsicht auf eine vierte Parksituation;
- Fig.5: eine perspektivische Darstellung zur Bestimmung einer Orientierung eines weiteren Fahrzeugs, welches in einer Parklücke benachbart zu derjenigen Parklücke abgestellt ist, in welches ein Fahrzeug eingeparkt werden soll; und
- Fig.6: eine perspektivische Darstellung zur Bestimmung einer zu Fig. 5 unterschiedlichen Orientierung eines weiteren Fahrzeugs in einer benachbarten Querparklücke.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren werden gleiche oder funktionsgleiche Elemente mit den gleichen Bezugszeichen versehen.

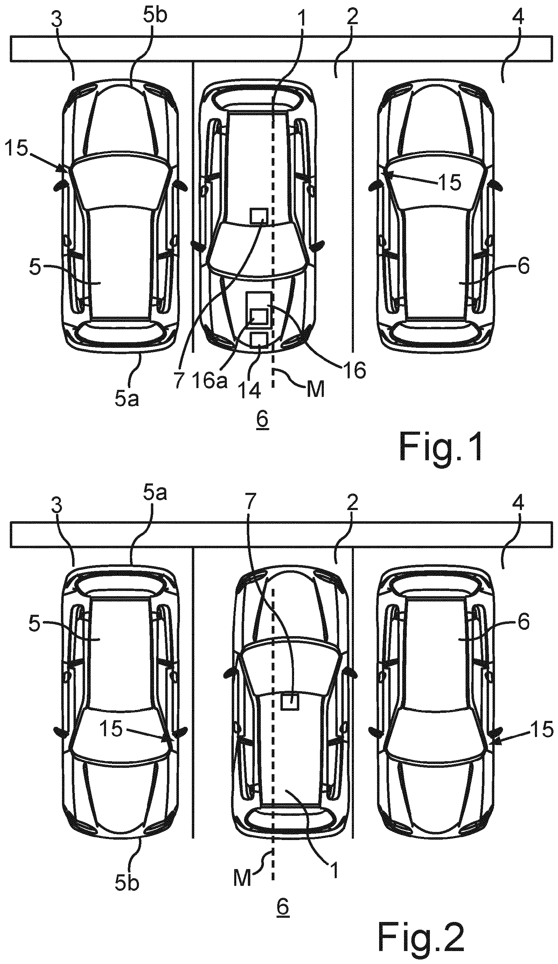

In Fig. 1 ist einer Draufsicht ein Parkszenario gezeigt, bei welchem ein Fahrzeug 1 bereits in einer spezifischen Zielposition und/oder eine spezifischen Zielorientierung in der Querparklücke 2 eingeparkt ist. Angrenzend zu dieser Querparklücke 2 ist eine erste weitere Querparklücke 3 und gegenüberliegend eine zweite weitere Querparklücke 4 ausgebildet. In der ersten weiteren Querparklücke 3 ist ein weiteres Fahrzeug 5 geparkt. Das weitere Fahrzeug 5 ist hier vorwärts eingeparkt. Dies bedeutet, dass ein Heck 5a einer Fahrbahn 6, die an die Querparklücken 2, 3, 4 mündet, zugewandt ist. Eine Front 5b des weiteren Fahrzeugs 5 ist dieser Fahrbahn 6 abgewandt. In den in Fig. 1 gezeigtem Szenario ist ein weiteres Fahrzeug 6 in der zweiten weiteren Querparklücke 4 geparkt. Auch dieses weitere Fahrzeug 6 ist vorwärts in diese zweite weitere Querparklücke 4 eingeparkt.

Im Hinblick auf ein vorteilhaftes Aussteigen, insbesondere eines Fahrers, ist das Fahrzeug 1 im gezeigten Ausführungsbeispiel rückwärts in die Querparklücke 2 eingeparkt worden. Darüber hinaus ist das Fahrzeug 1 außenmittig zu einer Mittellängsachse M der Querparklücke 2 positioniert worden. Insbesondere ist dieses Fahrzeug 1 in dieser außenmittigen Position näher zu derjenigen weiteren Querparklücke 3 positioniert, welcher eine Beifahrertür des Fahrzeugs 1 zugewandt ist. Damit ist es ermöglicht, dass zumindest ein Fahrer über die Fahrertür des Fahrzeugs 1 einen größeren Aussteigebereich in seiner Querparklücke 2 vorfindet.

In dieser Konstellation wurde das Fahrzeug 1 in umgekehrter Orientierung zu den weiteren, bereits vorher eingeparkt gewesenen Fahrzeugen 5 und 6 eingeparkt. Darüber hinaus ist es durch diese Orientierung allen drei Fahrern der Fahrzeuge 1, 5, und 6 ermöglicht, den größtmöglichen Einsteigebereich über die jeweilige Fahrertür bereitzuhalten. Das Fahrzeug 1 wurde zu einem Zeitpunkt in die erste Querparklücke 2 eingeparkt, zu dem die weiteren Fahrzeuge 5 und/oder 6 schon in den weiteren zweiten Querparklücke 3, 4 eingeparkt waren.

Selbiges gilt für das Parkszenario gemäß Fig. 2. Auch in dieser vereinfachten Draufsicht ist eine Konstellation gezeigt, bei welcher im Unterschied zu Fig. 1 die beiden weiteren Fahrzeuge 5 und 6 jeweils rückwärts in die weiteren Querparklücken 3 und 4 eingeparkt sind. Bei dieser Konstellation ist es vorteilhaft, wenn das diesbezüglich nachträglich zu parkende Fahrzeug 1 vorwärts in die Querparklücke 2 eingeparkt wurde und ebenfalls wiederum außermittig zur Mittellängsachse M darin abgestellt wurde. Insbesondere ist es bei dieser Konstellation vorteilhaft, wenn das Fahrzeug 1 mit seiner Beifahrertür näher zur weiteren Querparklücke 4 zugewandt positioniert ist. Somit ist auch in diesem Fall ein größtmöglicher Aussteigebereich über die Fahrertür des Fahrzeugs 1 ermöglicht. Ebenso ist ein größtmöglicher Zusteigebereich für die Fahrer der Fahrzeuge 1 und 5 über die jeweiligen Fahrertüren ermöglicht. Selbiges gilt dann für einen Zustieg für einen Fahrer über die Fahrertür des Fahrzeugs 6.

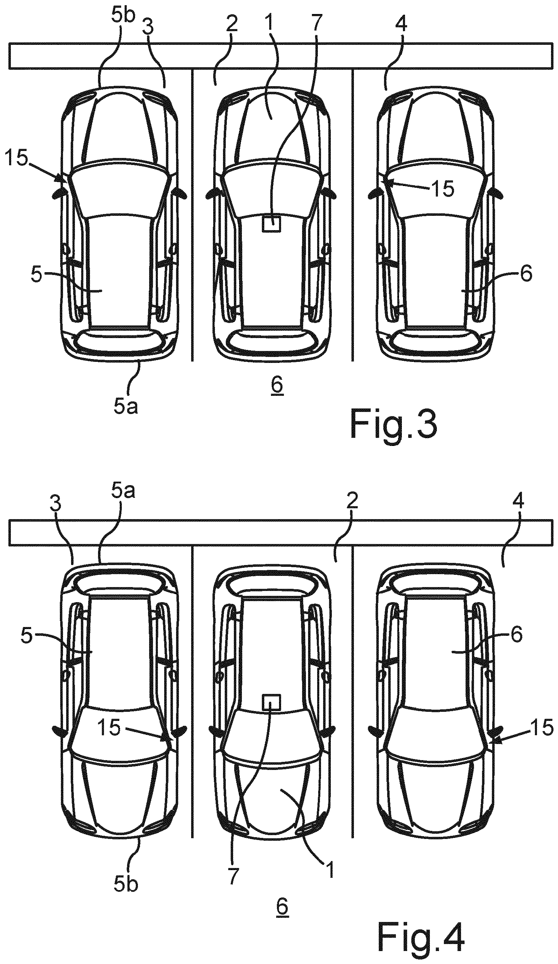

Ist beispielsweise aufgrund von Vorschriften in eine Querparklücke nur in einer bestimmten Orientierung, nämlich beispielsweise nur vorwärts, wie dies in Fig. 3 gezeigt ist, oder nur rückwärts, wie dies in Fig. 4 gezeigt ist, erlaubt, kann ebenfalls diesbezüglich eine bestmögliche Position für das zu parkende Fahrzeug 1 in Abhängigkeit von der Position und/oder der Orientierung der benachbart bereits geparkten Fahrzeuge 5 und 6 bestimmt werden. Insbesondere kann in diesen Parkszenarien gemäß Fig. 3 und Fig. 4 vorgesehen sein, dass das Fahrzeug 1 mittig in der Querparklücke 2 eingeparkt wird und die gleiche Orientierung wie die benachbarten weiteren Fahrzeuge 5 und 6 einnimmt.

Zur Bestimmung einer Orientierung eines weiteren, benachbart geparkten Fahrzeugs 5 und/oder 6 ist es allgemein in allen Ausführungsbeispielen vorgesehen, dass mit einer Erfassungseinheit, insbesondere einer optischen Erfassungseinheit 7, die Umgebung erfasst wird. Diese zumindest eine optische Erfassungseinheit 7 ist insbesondere eine Kamera. Durch diese zumindest eine optische Erfassungseinheit 7 des Fahrzeugs 1 wird zumindest ein Bild 17, insbesondere mehrere Bilder, des zumindest einen weiteren bereits geparkten Fahrzeugs 5, 6 vor dem Einparken des Fahrzeugs 1 in die Querparklücke 2 erzeugt. Das Bild 17 wird dahingehend ausgewertet, ob auf diesem Bild 17 ein Frontscheinwerfer oder eine Heckleuchte dieses weiteren Fahrzeugs 5 und/oder 6 zu erkennen ist. Es wird erkannt, dass das weitere Fahrzeug 5, 6 vorwärts orientiert in der weiteren Querparklücke 3 und/oder 4 eingeparkt ist, wenn in dem Bild 17 zumindest eine Heckleuchte enthalten ist. Es wird erkannt, dass das weitere Fahrzeug 5 und/oder 6 rückwärts orientiert in die weitere Querparklücke 3, 4 eingeparkt ist, wenn in dem Bild 17 zumindest ein Frontscheinwerfer enthalten ist.

In einer vorteilhaften Ausführung wird dazu die Farbgebung einer Lichtquelle in dem Bild 17 analysiert und ein Frontscheinwerfer des weiteren Fahrzeugs erkannt, wenn eine weiße Lichtquelle erkannt wird. Es wird eine Heckleuchte erkannt, wenn eine rote Lichtquelle erkannt wird. Insbesondere wird das Bild 17 dahingehend ausgewertet, ob in Breitenrichtung des weiteren Fahrzeugs 5, 6 an gegenüberliegenden Endbereichen beziehungsweise Seitenbereichen dieses weiteren Fahrzeugs 5, 6 jeweils eine gleiche Lichtquelle erkannt wird, wobei dann dadurch diejenigen Bereiche des weiteren Fahrzeugs 5, 6 erkannt werden, die Frontscheinwerfer oder Heckleuchten sein können.

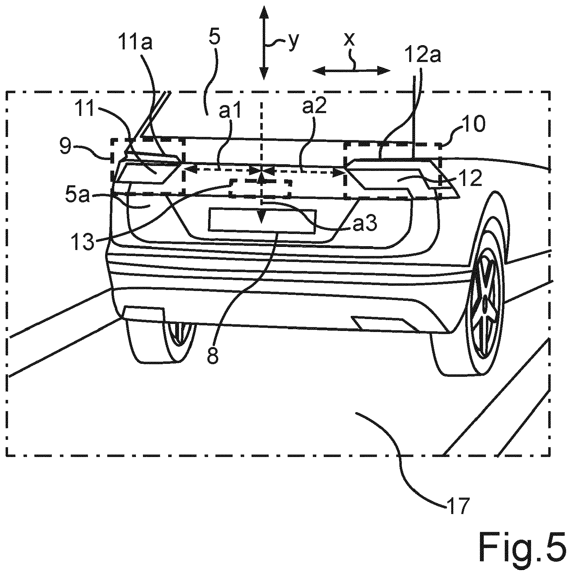

In einer vorteilhaften Ausführung wird vorgesehen, dass in dem durch die optische Erfassungseinheit 7 zumindest einen erfassten Bilds 17 nach einem amtlichen Kennzeichen gesucht wird. Beispielhaft ist in Fig. 5 das Szenario gezeigt, bei welchem das vorwärts eingeparkte weitere Fahrzeug 5 durch die optische Erfassungseinheit 7 des Fahrzeugs 1 beim Fahren auf der Fahrbahn 6 erfasst wird. Dieses Bild 17 wird in einer vorteilhaften Ausführung zunächst dahingehend ausgewertet, ob ein amtliches Kennzeichen 8 dieses weiteren Fahrzeugs 5 enthalten ist. Im gezeigten Ausführungsbeispiel gemäß Fig. 5 wird diesbezüglich ein amtliches Kennzeichen 8 dieses weiteren Fahrzeugs 5 erkannt. Insbesondere wird abhängig von diesem amtlichen Kennzeichen 8 nach einem Frontscheinwerfer oder einer Heckleuchte dieses weiteren Fahrzeugs 5 in dem Bild 17 gesucht. Insbesondere wird dabei abhängig von der Position dieses amtlichen Kennzeichens 8 nach einem Frontscheinwerfer oder einer Heckleuchte des weiteren Fahrzeugs 5 in diesem Bild 17 gesucht. Es ist dabei insbesondere vorgesehen, dass bei einem Erkennen des amtlichen Kennzeichens 8 in dem Bild 17 basierend auf dieser Position des amtlichen Kennzeichens 8 neue Suchfelder 9 und 10 in dem Bild 18 erzeugt werden. Insbesondere werden diese beiden Suchfelder 9 und 10 in Breitenrichtung x dieses weiteren Fahrzeugs 5 örtlich definiert in einem definierten Abstand a1 und a2 zur Position des amtlichen Kennzeichens 8 gebildet. Die beiden Suchfelder 9 und 10 sind flächenmäßig kleiner, insbesondere deutlich kleiner, als das gesamte Bild 17. Zusätzlich oder anstatt dazu können bei einem Erkennen des amtlichen Kennzeichens 8 in dem Bild 17 basierend auf der Position dieses amtlichen Kennzeichens 8 diese zwei neuen Suchfelder 9 und 10 in dem Bild 17 derart erzeugt werden, dass in Höhenrichtung y des weiteren Fahrzeugs 5 diese jeweils einen definierten zweiten Abstands a3 zur Position des amtlichen Kennzeichens 8 aufweisen. Insbesondere entsprechen diese beiden Abstände a1 und a3, wobei a2 vorzugsweise gleich a1 ist, denen, in denen Lichtquellen des weiteren Fahrzeugs 5 üblicherweise relativ zum amtlichen Kennzeichen 8 an diesem weiteren Fahrzeug 5, insbesondere an einem Fahrzeug, angeordnet sind. Die zwei Suchfelder 9 und 10 werden daher örtlich derart geschickt in dem Bild 17 positioniert, dass sie im Vergleich zur Position des amtlichen Kennzeichens 8 mit hoher Wahrscheinlichkeit diejenigen Flächenbereiche abdecken, in denen üblicherweise Frontscheinwerfer oder Heckleuchten im Bezug zum amtlichen Kennzeichen 8, auch in der Realität, angeordnet sind. Die Abstände a1, a2 und a3 werden insbesondere im Hinblick auf bestimmte Größen des amtlichen Kennzeichens 8 im Bild 17 im Vergleich zur Realität bestimmt. Diesbezüglich können zusätzlich oder anstatt dazu auch noch andere Größen von Komponenten des weiteren Fahrzeugs 5 berücksichtigt werden, von denen reale Größen bekannt sind oder einfach geschätzt werden können. Dadurch können auch präzise die realen Abstände in dem Bild 17 in den darin verkleinert angepassten Größenverhältnissen im Verhältnis zu anderen Größen durch die Abstände a1, a2 und a3 dargestellt werden.

Es kann in einer vorteilhaften Ausführung vorgesehen sein, dass in diesen Suchfeldern 9 und 10 eine Farbverteilung ausgewertet wird. Bei einem Rotanteil größer einem Schwellwert wird die Heckleuchte 11 in dem Suchfeld 9 erkannt. Bei einem Rotanteil größer einem Schwellwert wird eine weitere Heckleuchte 12 in dem Suchfeld 10 erkannt.

Wird andererseits ein Weißanteil größer einem Schwellwert erkannt, wird ein Frontscheinwerfer in dem Suchfeld 9 und/oder 10 erkannt.

Bei der Darstellung in Fig. 5, in welcher das vorwärtseingeparkte weitere Fahrzeug 5 dargestellt ist, werden in den Suchfeldern 9 und 10 Heckleuchten 11 und 12 erkannt. Dies kann insbesondere nur auf Basis der erwähnten Farbverteilung beurteilt werden. Zusätzlich oder anstatt dazu kann vorgesehen sein, dass die Suchfelder 9 und 10 so groß gesetzt werden, dass eine charakteristische Begrenzungskontur 11a und/oder 12a einer Komponente des Fahrzeugs 5, die üblicherweise an einem Heck 5a oder einer Front 5b dieses weiteren Fahrzeugs 5 angeordnet ist, erkannt wird. Insbesondere wird die dann erfasste und in dem Suchfeld 9 und/oder 10 enthaltene Begrenzungskontur 11a, 12a dahingehend ausgewertet, ob es sich bei der Komponente in dem Bild 17 um eine Lichtquelle handelt. Insbesondere wird ausgewertet, ob es sich dann um einen Frontscheinwerfer oder um eine Heckleuchte handelt.

In einer weiteren vorteilhaften Ausführung kann vorgesehen sein, dass abhängig von der Position des amtlichen Kennzeichens 8 zumindest ein drittes Suchfeld 13 in dem Bild 17 erzeugt wird. Dieses dritte Suchfeld 13 ist insbesondere unmittelbar oberhalb dem amtlichen Kennzeichen 8 erzeugt, und in dem Bild 17 lokal definiert angeordnet. Dieses dritte Suchfeld 13 wird bezüglich einer Farbgebung ausgewertet. Abhängig davon wird die Farbgebung des weiteren Fahrzeugs 5 bestimmt beziehungsweise erkannt. Es wird somit die grundsätzliche Lackierung und die grundsätzliche Farbgebung des weiteren Fahrzeugs 5 erkannt. Insbesondere wird diese Information herangezogen, um die Beurteilung der Farbverteilung in den Suchfeldern 11 und 12 verbessert durchführen zu können. Fehldetektionen eines Frontscheinwerfers und/oder einer Heckleuchte können dadurch verbessert vermieden werden, da die Farbverteilung in den Suchfeldern 9 und 10 dann verbessert beurteilt werden können, insbesondere im Hinblick auf die Farbgebung des weiteren Fahrzeugs 5.

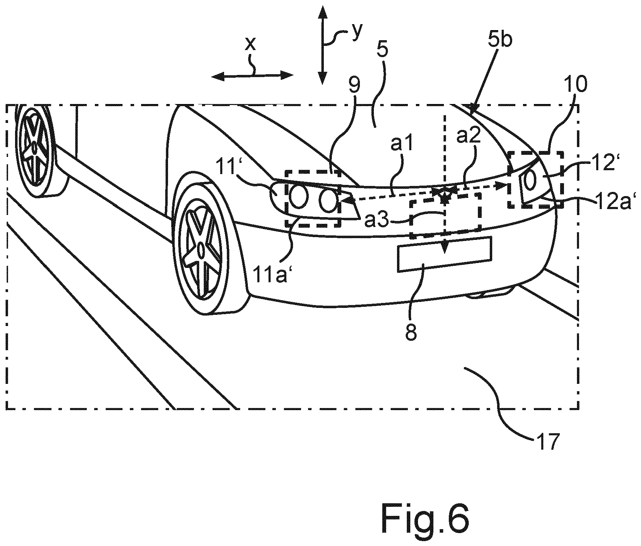

Fig. 6 ist in einer entsprechenden Darstellung wie in Fig. 5 ein Bild 17 gezeigt, bei welchem das weitere Fahrzeug 5 wie gemäß dem Parkszenario in Fig. 2 gezeigt ist. Bei diesem rückwärtseingeparkten Zustand des weiteren Fahrzeugs 5 wird mit der optischen Erfassungseinheit 7 die Front 5b erfasst. Das Beurteilungsszenario ist entsprechend wie in Fig. 5.

In Fig. 6 wird im Unterschied zu Fig. 5 dann erkannt, dass die Frontscheinwerfer 11', 12' in den Suchfeldern 9 und 10 enthalten sind und somit dieses weitere Fahrzeug 5 rückwärts in diese weitere Querparklücke 3 eingeparkt ist. Diese Frontscheinwerfer 11', 12` weisen Begrenzungskonturen 11a` und 12a` auf.

Zusätzlich oder anstatt dazu kann vorgesehen sein, dass das Fahrzeug 1 zumindest einen Radarsensor 14 (Fig. 1) aufweist. Dieser Radarsensor 14 ist mit einer Höhenmessfunktion ausgebildet. Mit diesem Radarsensor 14 kann ein Übergang 15 (Fig. 1) zwischen einem Karosseriebereich und einem Dach des weiteren Fahrzeugs 5 bestimmt werden. Abhängig von einer Position des Übergangs zu einem Ende, insbesondere einer Front 5b und/oder einem Heck 5a wird erkannt, ob dieses weitere Fahrzeug 5 vorwärts oder rückwärts orientiert in dieser weiteren Querparklücke 3 eingeparkt ist.

Die hier dargelegten Erläuterungen für das weitere Fahrzeug 5 gelten umfänglich und entsprechend auch für das weitere Fahrzeug 6.

Insbesondere weist das Fahrzeug 7 ein Parkassistenzsystems 16 auf. Dieses weist insbesondere zumindest eine Erfassungseinheit, insbesondere die optische Erfassungseinheit 7, auf. Das Parkassistenzsystem 16 weist vorzugsweise darüber hinaus zumindest eine Auswerteeinheit 16a auf. Diese kann auch eine Steuereinheit sein. Sie kann einen Speicher aufweisen. Darüber hinaus weist das Parkassistenzsystem 16, insbesondere die Auswerteeinheit 16a, ein Computerprogrammprodukt auf. Dieses weist Befehle auf, die, wenn sie auf einem Computer, insbesondere der Auswerteeinheit 16a abgelegt sind, zum Durchführen des Verfahrens, wie es genannt wurde, ausgebildet ist.

### Bezugszeichenliste

- 1: Fahrzeug
- 2: Querparklücke
- 3: zweite Querparklücke
- 4: zweite Querparklücke
- 5: weiteres Fahrzeug
- 5a: Heck
- 5b: Front
- 6: weiteres Fahrzeug
- 7: Erfassungseinheit
- 8: amtliche Kennzeichen
- 9: erstes Suchfeld
- 10: zweites Suchfeld
- 11: Heckleuchte
- 11': Frontscheinwerfer
- 11a: Begrenzungskontur
- 11 a`: Begrenzungskontur
- 12: Heckleuchte
- 12`: Frontscheinwerfer
- 12a: Begrenzungskontur
- 12a': Begrenzungskontur
- 13: drittes Suchfeld
- 14: Radarsensor
- 15: Übergang
- 16: Parkassistenzsystem
- 17: Bild
- a1: erster Abstand
- a2: erster Abstand
- a3: zweiter Abstand
- x: Breitenrichtung
- y: Höhenrichtung

## Patentansprüche

1. Verfahren zum Einparken eines Fahrzeugs (1) in eine erste Querparklücke (2), bei welchem in zumindest einer zweiten Querparklücke (3, 4), die an die erste Querparklücke (2) angrenzt, ein weiteres Fahrzeug (5, 6) geparkt ist, wobei die Position und/oder Orientierung des weiteren Fahrzeugs (5, 6) in der zweiten Querparklücke (3, 4) bestimmt wird und abhängig davon die Zielposition und/oder Zielorientierung des Fahrzeugs (1) in der ersten Querparklücke (2) bestimmt wird, wobei durch zumindest eine optische Erfassungseinheit (7) des Fahrzeugs (1) zumindest ein Bild (17) des zumindest einen weiteren Fahrzeugs (5, 6) vor dem Einparken des Fahrzeugs (1) in die erste Querparklücke (2) erzeugt wird und das Bild (17) dahingehend ausgewertet wird, ob auf dem Bild (17) ein Frontscheinwerfer (11', 12') oder eine Heckleuchte (11, 12) des weiteren Fahrzeugs (5, 6) zu erkennen ist, wobei erkannt wird, dass das weitere Fahrzeug (5, 6) vorwärts orientiert in der zweiten Querparklücke (3, 4) eingeparkt ist, wenn in dem Bild (17) zumindest eine Heckleuchte (11, 12) enthalten ist, und erkannt wird, dass das weitere Fahrzeug (5, 6) rückwärts orientiert in die zweite Querparklücke (3, 4) eingeparkt ist, wenn in dem Bild (17) zumindest ein Frontscheinwerfer (11', 12') enthalten ist, **dadurch gekennzeichnet, dass**
- das Bild (17) dahingehend ausgewertet wird, ob in Breitenrichtung (x) des weiteren Fahrzeugs (5, 6) an gegenüberliegenden Endbereichen des weiteren Fahrzeugs (5, 6) jeweils eine gleiche Lichtquelle erkannt wird, wobei dann dadurch diejenigen Bereiche des weiteren Fahrzeugs (5, 6) erkannt werden, die Frontscheinwerfer (11', 12') oder Heckleuchten (11, 12) sein können, und/oder
- in dem Bild (17) nach einem amtlichen Kennzeichen (8) des weiteren Fahrzeugs (5, 6) gesucht wird, wobei dann, wenn ein amtliches Kennzeichen (8) erkannt wird positionell abhängig davon nach einem Frontscheinwerfer (11', 12') oder einer Heckleuchte (11, 12) des weiteren Fahrzeugs (5, 6) in dem Bild (17) gesucht wird.

2. Verfahren nach Anspruch 1,
**dadurch gekennzeichnet, dass**
die Farbgebung einer Lichtquelle in dem Bild (17) analysiert wird und eine Heckleuchte (11, 12) erkannt wird, wenn eine rote Lichtquelle erkannt wird.

3. Verfahren nach einem der vorhergehenden Ansprüche,
**dadurch gekennzeichnet, dass**
bei einem Erkennen des amtlichen Kennzeichens (8) in dem Bild (17) basierend auf der Position des amtlichen Kennzeichnens (8) zwei neue Suchfelder (9, 10) in dem Bild (17) erzeugt werden, die in Breitenrichtung (x) des weiteren Fahrzeugs (5, 6) jeweils einen definierten ersten Abstand (a1, a2) zur Position des amtlichen Kennzeichens (8) aufweisen, und/oder die in Höhenrichtung (y) des weiteren Fahrzeugs (5, 6) jeweils einen definierten zweiten Abstand (a3) zur Position des amtlichen Kennzeichens (8) aufweisen, wobei die Abstände (a1, a2, a3) denen entsprechen, in denen außenseitige Lichtquellen des weiteren Fahrzeugs (5, 6) üblicherweise relativ zum amtlichen Kennzeichen an einem Fahrzeug (8) angeordnet sind.

4. Verfahren nach Anspruch 3,
**dadurch gekennzeichnet, dass**
in diesen Suchfelder (9, 10) eine Farbverteilung ausgewertet wird, wobei bei einem Rotanteil größer einem Schwellwert eine Heckleuchte (11, 12) erkannt wird.

5. Verfahren nach Anspruch 3 oder 4,
**dadurch gekennzeichnet, dass**
die Suchfelder (9, 10) so groß gesetzt werden, dass eine Begrenzungskontur (11a, 12a, 11a', 12a') einer Komponente des weiteren Fahrzeugs (5, 6), die üblicherweise an einem Heck (5a) oder einer Front (5b) des weiteren Fahrzeugs (5, 6) außenseitig angeordnet ist, auf dem Bild (17) erfasst wird, wenn das Heck (5a) oder die Front (5b) erfasst werden, wobei die Begrenzungskontur (11a, 12a, 11a', 12a`) dahingehend ausgewertet wird, ob es sich bei der Komponente in dem Bild (17) um eine Lichtquelle handelt.

6. Verfahren nach einem der vorhergehenden Ansprüche 3 bis 5,
**dadurch gekennzeichnet, dass**
abhängig von der Position des amtlichen Kennzeichens (8) zumindest ein drittes Suchfeld (13) in dem Bild (17) erzeugt wird, wobei das dritte Suchfeld (13) bezüglich seiner Farbgebung ausgewertet wird und abhängig davon die Farbgebung des weiteren Fahrzeugs (5, 6) bestimmt wird.

7. Verfahren nach einem der vorhergehenden Ansprüche,
**dadurch gekennzeichnet, dass**
das Fahrzeug (1) zumindest einen Radarsensor (14) mit Höhenmessfunktion aufweist, wobei mit diesem Radarsensor (14) ein Übergang (15) zwischen einem Karosseriebereich und einem Dach des weiteren Fahrzeugs (5, 6) bestimmt wird, wobei abhängig von einer Position dieses Übergangs (15) zu einem Ende (5a, 5b) des weiteren Fahrzeugs (5, 6) erkannt wird, ob das weitere Fahrzeug (5, 6) vorwärts oder rückwärts orientiert in der zweiten Querparklücke (3, 4) geparkt ist.

8. Parkassistenzsystem (16) für ein Fahrzeug (1) zum Einparken in eine Querparklücke, welches zumindest eine Erfassungseinheit (7) und eine Auswerteeinheit (16a) aufweist, wobei das Parkassistenzsystem (16) zum Durchführen eines Verfahrens nach einem der vorhergehenden Ansprüche ausgebildet ist.

## Claims

1. Method for parking a vehicle (1) in a first perpendicular parking space (2), in which a further vehicle (5, 6) is parked in at least one second perpendicular parking space (3, 4) which adjoins the first perpendicular parking space (2), wherein the position and/or orientation of the further vehicle (5, 6) in the second perpendicular parking space (3, 4) is ascertained and the target position and/or target orientation of the vehicle (1) in the first perpendicular parking space (2) are ascertained on the basis thereof, wherein at least one image (17) of the at least one further vehicle (5, 6) is generated by means of at least one optical detection unit (7) of the vehicle (1) before the vehicle (1) is parked in the first perpendicular parking space (2), and the image (17) is evaluated as to whether a headlight (11', 12') or a rear light (11, 12) of the further vehicle (5, 6) can be recognized in the image (17), wherein it is recognized that the further vehicle (5, 6) is parked oriented forward in the second perpendicular parking space (3, 4) if at least one rear light (11, 12) is contained in the image (17), and it is recognized that the further vehicle (5, 6) is parked oriented backward in the second perpendicular parking space (3, 4) if at least one headlight (11', 12') is contained in the image (17), **characterized in that**
- the image (17) is evaluated as to whether an identical light source is recognized in each case at opposite end regions of the further vehicle (5, 6) in the width direction (x) of the further vehicle (5, 6), wherein the regions of the further vehicle (5, 6) that may be the headlights (11', 12') or the rear lights (11, 12) can then be recognized as a result, and/or
- a license plate (8) of the further vehicle (5, 6) is searched for in the image (17), wherein when a license plate (8) is recognized, a headlight (11', 12') or a rear light (11, 12) of the further vehicle (5, 6) is then searched for in the image (17) depending on the position of the license plate.

2. Method according to claim 1,
**characterized in that**
the coloring of a light source in the image (17) is analyzed, and a rear light (11, 12) is recognized if a red light source is recognized.

3. Method according to either of the preceding claims,
**characterized in that**
in the case that the license plate (8) is recognized in the image (17), two new search fields (9, 10) are generated in the image (17) based on the position of the license plate (8), which search fields are each at a defined first distance (a1, a2) from the position of the license plate (8) in the width direction (x) of the further vehicle (5, 6), and/or which search fields are each at a defined second distance (a3) from the position of the license plate (8) in the height direction (y) of the further vehicle (5, 6), wherein the distances (a1, a2, a3) correspond to those at which exterior light sources of the further vehicle (5, 6) are usually arranged relative to the license plate on a vehicle (8).

4. Method according to claim 3,
**characterized in that**
a color distribution in said search fields (9, 10) is evaluated, a rear light (11, 12) being recognized in the case of a red component greater than a threshold value.

5. Method according to either claim 3 or claim 4,
**characterized in that**
the search fields (9, 10) are set to such size that a delimiting contour (11a, 12a, 11a', 12a') of a component of the further vehicle (5, 6), which is usually arranged on the exterior on a rear (5a) or a front (5b) of the further vehicle (5, 6), is detected in the image (17) when the rear (5a) or the front (5b) is detected, the delimiting contour (11a, 12a, 11a', 12a') being evaluated as to whether the component in the image (17) is a light source.

6. Method according to any of the preceding claims 3 to 5,
**characterized in that**
depending on the position of the license plate (8), at least one third search field (13) is generated in the image (17), wherein the third search field (13) is evaluated with respect to its color and the coloring of the further vehicle (5, 6) is ascertained on the basis thereof.

7. Method according to any of the preceding claims,
**characterized in that**
the vehicle (1) comprises at least one radar sensor (14) having a height measuring function, wherein a transition (15) between a body region and a roof of the further vehicle (5, 6) is ascertained by means of said radar sensor (14), wherein depending on a position of said transition (15) relative to an end (5a, 5b) of the further vehicle (5, 6), it is recognized whether the further vehicle (5, 6) is parked oriented forward or backward in the second perpendicular parking space (3, 4).

8. Parking assistance system (16) for a vehicle (1) for parking in a perpendicular parking space, which vehicle comprises at least one detection unit (7) and an evaluation unit (16a), the parking assistance system (16) being designed to carry out a method according to any of the preceding claims.

## Revendications

1. Procédé permettant le stationnement d'un véhicule (1) dans une première place de stationnement en bataille (2), dans lequel un autre véhicule (5, 6) est stationné dans au moins une seconde place de stationnement en bataille (3, 4) qui est adjacente à la première place de stationnement en bataille (2), dans lequel la position et/ou l'orientation de l'autre véhicule (5, 6) dans la seconde place de stationnement en bataille (3, 4) sont déterminées et, en fonction de celles-ci, la position cible et/ou l'orientation cible du véhicule (1) dans la première place de stationnement en bataille (2) sont déterminées, dans lequel au moins une image (17) de l'au moins un autre véhicule (5, 6) est générée par au moins une unité de détection (7) optique du véhicule (1) avant le stationnement du véhicule (1) dans la première place de stationnement en bataille (2) et l'image (17) est évaluée afin de savoir si un phare avant (11', 12`) ou un feu arrière (11, 12) de l'autre véhicule (5, 6) peut être reconnu sur l'image (17), dans lequel il est reconnu que l'autre véhicule (5, 6) est stationné en étant orienté vers l'avant dans la seconde place de stationnement en bataille (3, 4) lorsqu'au moins un feu arrière (11, 12) est contenu dans l'image (17), et il est reconnu que l'autre véhicule (5, 6) est stationné en étant orienté vers l'arrière dans la seconde place de stationnement en bataille (3, 4) lorsqu'au moins un phare avant (11', 12`) est contenu dans l'image (17), **caractérisé en ce que**
- l'image (17) est évaluée afin de savoir si, dans le sens de la largeur (x) de l'autre véhicule (5, 6), respectivement une même source de lumière est reconnue dans des zones d'extrémité opposées de l'autre véhicule (5, 6), dans lequel lesdites zones de l'autre véhicule (5, 6) qui peuvent être des phares avant (11', 12`) ou des feux arrière (11, 12) sont ainsi reconnues, et/ou
- une plaque d'immatriculation (8) de l'autre véhicule (5, 6) est recherchée dans l'image (17), dans lequel, si une plaque d'immatriculation (8) est reconnue, en fonction de la position de celle-ci, un phare avant (11', 12`) ou un feu arrière (11, 12) de l'autre véhicule (5, 6) est recherché dans l'image (17).

2. Procédé selon la revendication 1,
**caractérisé en ce que**
le coloris d'une source de lumière dans l'image (17) est analysé et un feu arrière (11, 12) est reconnu lorsqu'une source de lumière rouge est reconnue.

3. Procédé selon l'une des revendications précédentes,
**caractérisé en ce que**
lors d'une reconnaissance de la plaque d'immatriculation (8) dans l'image (17), deux nouveaux champs de recherche (9, 10) sont générés dans l'image (17) sur la base de la position de la plaque d'immatriculation (8), lesquels présentent, dans le sens de la largeur (x) de l'autre véhicule (5, 6), respectivement une première distance (a1, a2) définie par rapport à la position de la plaque d'immatriculation (8), et/ou lesquels présentent, dans le sens de la hauteur (y) de l'autre véhicule (5, 6), respectivement une seconde distance (a3) définie par rapport à la position de la plaque d'immatriculation (8), dans lequel les distances (a1, a2, a3) correspondent à celles dans lesquelles des sources de lumière côté extérieur de l'autre véhicule (5, 6) sont généralement disposées par rapport à la plaque d'immatriculation (8) sur un véhicule.

4. Procédé selon la revendication 3,
**caractérisé en ce que**
une répartition des couleurs est évaluée dans lesdits champs de recherche (9, 10), dans lequel un feu arrière (11, 12) est reconnu lorsqu'une proportion de rouge est supérieure à une valeur seuil.

5. Procédé selon la revendication 3 ou 4,
**caractérisé en ce que**
les champs de recherche (9, 10) sont établis de manière à être suffisamment grands pour qu'un contour de délimitation (11a, 12a, 11a', 12a`) d'un composant de l'autre véhicule (5, 6) qui est généralement disposé côté extérieur sur un arrière (5a) ou un avant (5b) de l'autre véhicule (5, 6) soit détecté sur l'image (17) si l'arrière (5a) ou l'avant (5b) est détecté, dans lequel le contour de délimitation (11a, 12a, 11a', 12a`) est évalué afin de savoir si le composant dans l'image (17) est une source de lumière.

6. Procédé selon l'une des revendications précédentes 3 à 5,
**caractérisé en ce que**
en fonction de la position de la plaque d'immatriculation (8), au moins un troisième champ de recherche (13) est généré dans l'image (17), dans lequel le troisième champ de recherche (13) est évalué en fonction de son coloris et, en fonction de celui-ci, le colons de l'autre véhicule (5, 6) est déterminé.

7. Procédé selon l'une des revendications précédentes,
**caractérisé en ce que**
le véhicule (1) présente au moins un capteur radar (14) comportant une fonction de mesure de hauteur, dans lequel, à l'aide dudit capteur radar (14), une transition (15) entre une zone de carrosserie et un toit de l'autre véhicule (5, 6) est déterminée, dans lequel, en fonction d'une position de ladite transition (15) par rapport à une extrémité (5a, 5b) de l'autre véhicule (5, 6), on reconnaît si l'autre véhicule (5, 6) est stationné en étant orienté vers l'avant ou vers l'arrière dans la seconde place de stationnement en bataille (3, 4).

8. Système d'aide au stationnement (16) pour un véhicule (1) permettant le stationnement dans une place de stationnement en bataille, lequel système présente au moins une unité de détection (7) et une unité d'évaluation (16a), dans lequel le système d'aide au stationnement (16) est configuré pour mettre en oeuvre un procédé selon l'une des revendications précédentes.
